# EUROPEAN PATENT SPECIFICATION

(11) **EP 3 486 077 B1**
(45) Date of publication and mention of the grant of the patent: **20.12.2023**
(21) Application number: 17202401.0
(22) Date of filing: 17.11.2017
(51) Int. Cl.: B29D 24/00, B29C 67/24, B29D 99/00

(54) **MULTICELLULAR STRUCTURE COMPRISING INTERCONNECTED CELLS**
MULTIZELLULARE STRUKTUR MIT VERBUNDENEN ZELLEN
STRUCTURE MULTICELLULAIRE COMPRENANT DES CELLULES INTERCONNECTÉES

(43) Date of publication of application: 22.05.2019
(73) Proprietor: 3M Innovative Properties Company, Saint Paul, MN 55133-3427 (US)
(72) Inventor: Klünker, Eike, 41453 Neuss (DE); Kalish, Jeff Paul, St. Paul, MN 55133-3427 (US); Jonza, James Michael, St. Paul, MN 55133-3427 (US)
(74) Representative: Mathys & Squire

(56) References cited:
- WO-A1-2007/003321
- WO-A1-2008/045680
- DE-A1- 19 952 570

## Description

### Technical Field

The present disclosure relates generally to the field of multicellular structures comprising interconnected cells and sandwich composite articles comprising the same. The present disclosure also relates to a method of manufacturing such multicellular structures, and uses thereof.

### Background

Multicellular structures and articles, in particular composite sandwich panels comprising a honeycomb core have been used for a variety of packaging, holding, protecting, supporting, containing, engineering, and dampening purposes. These structures are generally characterized by high strength at low density, and are widely used in many industries, including transportation and construction industries, as well as in the packaging industries. The multicellular structures and articles may be manufactured by using a variety of different materials, depending on the intended application and required characteristics, whereby the materials include paper, carton, polymeric materials, fiber reinforced plastics, composite materials and metals, in particular aluminum.

Multicellular structures and articles made of polymeric materials (for example of at least one of thermoplastic or thermoset materials) are particularly suitable for those applications requiring lightweight characteristics. A suitable method of manufacturing polymer-based multicellular structures utilizes high-pressure extrusion replication from polymer melts.

Common extrusion replication processes to produce multicellular structures are described, for example in U.S. Pat. Nos. 3,141,913 (Edwards) and 3,439,798 (James), Great Britain Pat. Doc. No. GB 1 325 017 (Noguchi) and U.S. Pat. Pub. No. 2009/0226698 (De Maria). These processes generally involve the use of a shaping/molding roll and a smooth roll, wherein the shaping/molding roll comprises, on its surface, precursor structures of the multicellular structure to be obtained, and whereby the shaping is performed by allowing the smooth roll to press an extruded layer of the polymer melt onto the molding roll so as to allow the polymer melt to be incorporated into the precursor structures of the multicellular structure provided in the molding roll. However, due to the high viscosity of the polymer melt used in the extrusion replication process, the penetration depth of the melt into the precursor structures of the multicellular structure, thus, the replication depth of the multicellular structure is limited. For the same reasons, the multicellular structures having very thin walls may not be produced by extrusion replication process. Typically, multicellular structures having fine structures, such as a cell wall height of greater than 20 mm coupled with a cell wall thickness of no greater than 2.0 mm, would not be achievable by conventional extrusion replication process. In addition, common extrusion replication processes require the application of high-pressure to facilitate the incorporation of the polymer melt into the precursor structures of the multicellular structure, which necessarily result in increased complexity and additional costs.

WO 2008/045680 A1 discloses a microstructured mold prepared from a photocured polymeric material.

Without contesting the technical advantages associated with the method of manufacturing multicellular structures known in the art, there is still a need for a convenient and cost-effective method for producing multicellular structures comprising interconnected cells, which results in multicellular structures provided with improved mechanical performance and characteristics, in particular increased stiffness and reduced density.

### Summary

According to one aspect, the present disclosure relates to a process according to claim 1 of manufacturing a multicellular structure comprising interconnected cells.

According to another aspect, the present disclosure relates to a multicellular structure according to claim 8.

According to still another aspect, the present disclosure relates to a multicellular structure comprising a plurality of interconnected cells having at least one polygonal shape, each cell having cell walls, wherein none of the cell walls comprise a combination of layers, wherein each cell wall has a thickness, wherein the wall thicknesses are no greater than 0.5 mm, wherein each cell wall has a height, and wherein for each cell wall, the cell height to the cell wall thickness aspect-ratio is greater than 15:1.

In yet another aspect, the present disclosure relates to a sandwich composite comprising the multicellular structure as described above.

According to still another aspect, the present disclosure relates to the use of a multicellular structure or a sandwich composite as described above for industrial applications. In yet another aspect, the present disclosure relates to the use of a multicellular structure or a sandwich composite as described above for home and office improvement applications and for personal safety applications.

### Detailed description

According to one aspect, the present disclosure relates to a process according to claim 1 of manufacturing a multicellular structure comprising interconnected cells.

Surprisingly, the process as described above, in particular, the step of incorporating the reactive monomer mixture into the precursor structures of the multicellular structure thereby substantially filling up the precursor structures of the mold, wherein the reactive monomer mixture has a viscosity of no greater than 10,000 mPa-s when incorporated into the precursor structures of the multicellular structure and when measured according to the viscosity test method defined in the experimental section, allows the manufacturing of multicellular structures comprising interconnected cells having fine structures, such as those having typically a cell wall height of greater than 20 mm coupled with a cell wall thickness of no greater than 2.0 mm.

Multicellular structures obtainable by the process as described above, and having fine structures are provided with improved mechanical performance and characteristics such as e.g. increased stiffness and reduced density, when compared to multicellular structures not provided with fine structures.

Without wishing to be bound by theory, it is believed that this ability is due to the outstanding wetting and penetration characteristics provided by the polymerizable precursor of the polymeric material comprising a reactive monomer mixture having a viscosity of no greater than 10,000 mPa-s when incorporated into the precursor structures of the multicellular structure and when measured according to the viscosity test method defined in the experimental section, and which allows the polymerizable precursor of the polymeric material to substantially fill-up the precursor structures of the mold before the polymerizing step of the polymerizable precursor of a polymeric material into the precursor structures of the mold. Advantageously, these excellent wetting and penetration characteristics are provided without the need to apply pressure on the polymerizable precursor to ensure good penetration into the precursor structures of the multicellular structure. In a beneficial aspect of the disclosure, the reactive monomer mixture may substantially fill up the precursor structures of the mold at atmospheric pressure.

The multicellular structures of the present disclosure are particularly suitable for various, including industrial applications, home and office improvement applications and for personal safety applications.

In the context of the present disclosure, the expression "precursor structures of the multicellular structure" is meant to refer to the structures present in the mold, in the form of grooves, channels, recesses, holes, niches, perforations, indentations and any combinations thereof, which replicate the structure and shape of the structures of the multicellular structure to be obtained. In other words, the precursor structures of the multicellular structure, when appropriately filled up with the polymerizable precursor of the polymeric material, will allow forming the desired multicellular structure after suitable polymerization of the polymerizable precursor of the polymeric material into the precursor structures of the mold and appropriate demolding of the multicellular structure formed in the earlier step.

In the context of the present disclosure still, the expression "substantially filling up the precursor structures of the mold" is meant to express that the volume occupied by the precursor structures is filled up with the polymerizable precursor of the polymeric material at least at 80% (in some embodiments, at least at 85%, at least at 90%, at least at 95%, or even at least at 98%) by volume of the precursor structures.

Any multicellular structures comprising interconnected cells may be used in the context of the present disclosure. Suitable multicellular structures comprising interconnected cells for use herein are commonly known in the art and will be easily identified by those skilled in the art, in the light of the present description. In the same manner, the corresponding molds comprising precursor structures of the multicellular structures will also be easily identified by those skilled in the art, in the light of the present description.

Suitable multicellular structures for use herein typically take the form of a cell layer having a first major surface and a second major surface opposite the first major surface, and wherein the cell layer includes an array of cells interconnected with each other. Each of the cells includes at least three cell walls extending between the first and second major surfaces thereof. Some or all cell walls may be shared by the adjacent cells. Each cell is provided with a cell wall thickness and a cell wall height, as commonly known in the art.

As will be easily apparent to those skilled in the art, the cells may have a variety of shapes including triangles, squares, rectangles, pentagons, hexagons, heptagons, octagons, polygons, and any combinations thereof. Moreover, the number of walls shared by adjacent interconnected cells may be varied depending on the desired pattern and ultimate structure.

According to a preferred aspect, the multicellular structure for use herein has an aspect-ratio (cell wall height to cell wall thickness) of greater than 5:1, greater than 10:1, greater than 15:1, greater than 20:1, greater than 25:1, or even greater than 30:1.

According to the claimed invention, the multicellular structure for use herein has a cell wall height of greater than 5 mm, preferably greater than 8 mm, greater than 10 mm, greater than 15 mm, greater than 20 mm, greater than 25 mm, or even greater than 30 mm.

In yet another preferred aspect, the multicellular structure for use herein has a cell wall thickness of no greater than 2.5 mm, no greater than 2.0 mm, no greater than 1.5 mm, no greater than 1.0 mm, no greater than 0.5 mm, no greater than 0.2 mm, no greater than 0.1 mm, no greater than 0.05 mm, or even no greater than 0.02 mm.

In yet another preferred aspect of the present disclosure, the multicellular structure for use herein has a cell wall thickness in a range from 0.005 to 2.5 mm, from 0.02 to 2.0 mm, from 0.05 to 1.5 mm, from 0.05 to 1.0 mm, or even from 0.1 to 0.5 mm.

According to an advantageous execution, the multicellular structure for use herein is a honeycomb structure. Preferably, the honeycomb structure comprises interconnected cells having a shape selected from the group of hexagons, squares, triangles, and any combinations thereof. More preferably, the honeycomb structure comprises interconnected cells having a hexagonal shape.

The process of manufacturing a multicellular structure comprising interconnected cells according to the present disclosure comprises the step of incorporating the reactive monomer mixture into the precursor structures of the multicellular structure thereby substantially filling up the precursor structures of the mold, wherein the reactive monomer mixture has a viscosity of no greater than 10,000 mPa-s when incorporated into the precursor structures of the multicellular structure and when measured according to the viscosity test method defined in the experimental section.

In one preferred aspect of the process according to the present disclosure, the reactive monomer mixture for use herein has a viscosity of no greater than 9,000 mPa-s, no greater than 8,000 mPa-s, no greater than 7,000 mPa-s, no greater than 6,000 mPa-s, no greater than 6,500 mPa-s, no greater than 6,000 mPa-s, no greater than 5,500 mPa-s, no greater than 5,000 mPa-s, no greater than 4,000 mPa-s, no greater than 3,500 mPa-s, no greater than 3,000 mPa-s, no greater than 2,500 mPa-s, no greater than 2,000 mPa-s, or even no greater than 1,500 mPa-s, when measured according to the viscosity test method defined in the experimental section.

In another preferred aspect of the process according to the present disclosure, the reactive monomer mixture for use herein has a viscosity of no greater than 1,300 mPa-s, no greater than 1,000 mPa-s, no greater than 800 mPa-s, no greater than 600 mPa-s, no greater than 500 mPa-s, no greater than 300 mPa-s, no greater than 200 mPa-s, no greater than 150 mPa-s, no greater than 100 mPa-s, no greater than 80 mPa-s, no greater than 50 mPa-s, no greater than 30 mPa-s, no greater than 20 mPa-s, or even no greater than 10 mPa-s, when measured according to the viscosity test method defined in the experimental section.

Appropriate reactive monomer mixtures and the corresponding polymerizable precursors of a polymeric material may be conveniently selected depending on the desired application and technical performance of the resulting multicellular structure.

According to the claimed invention, the monomers of the reactive monomer mixture are selected from the group consisting of lactams, lactones, isocyanates, polyols, polyamines, and any combinations or mixtures thereof. More preferably, the monomers of the reactive monomer mixture are selected from the group consisting of lactams, in particular caprolactams, laurolactams, and any combinations or mixtures thereof. Even more preferably, the monomers of the reactive monomer mixture are selected from the group consisting of caprolactams, in particular epsilon-caprolactam.

According to a typical aspect, the polymeric material for use herein is selected from the group consisting of polymeric elastomers, thermoplastic polymers, thermoplastic elastomers, thermoset polymers, thermoset elastomers, and any combinations or mixtures thereof.

In a preferred aspect, the polymeric material for use herein is selected from the group consisting of polyamides, polyurethanes, any combinations or mixtures thereof.

According to a preferred aspect, the polymeric material for use herein is selected from the group consisting of polyamides, any combinations or mixtures thereof. More preferably, the polymeric material for use herein is a polyamide which is e.g., at least one of polyamide 6, polyamide 12, polyamide 66, polyamide 612, or polyamide 46.

According to an advantageous aspect of the process according to the present disclosure, the reactive monomer mixture and/or the mold may be appropriately heated so as to prepare the reactive monomer mixture for the subsequent polymerization of the polymerizable precursor of a polymeric material into the precursor structures of the mold. The optional heating step will ensure in particular appropriate melting and heating of the reactive ingredients of the reactive monomer mixture before the polymerization step. Suitable heating temperatures may be appropriately chosen based on the starting reactive monomer mixture. In some aspects of the disclosure, the optional heating step may also initiate and/or accelerate the polymerization reaction of the polymerizable precursor of the polymeric material into the precursor structures of the mold.

The process of manufacturing a multicellular structure comprising interconnected cells according to the present disclosure further comprises incorporating the reactive monomer mixture into the precursor structures of the multicellular structure thereby substantially filling up the precursor structures of the mold.

According to an advantageous aspect of the process according to the disclosure, incorporating the reactive monomer mixture into the precursor structures of the multicellular structure thereby substantially filling up the precursor structures of the mold, is performed without applying any additional (external) pressure other than atmospheric pressure (i.e., about 101,300 Pa).

In an exemplary aspect, incorporating the reactive monomer mixture into the precursor structures of the multicellular structure is performed by simply pouring the reactive monomer mixture into the precursor structures of the multicellular structure.

According to a preferred aspect of the process according to the disclosure, incorporating the reactive monomer mixture into the precursor structures of the multicellular structure thereby substantially filling up the precursor structures of the mold, is substantially completed within a period of no greater than 30 seconds, no greater than 25 seconds, no greater than 20 seconds, no greater than 15 seconds, no greater than 10 seconds, or even no greater than 5 seconds.

The process of manufacturing a multicellular structure comprising interconnected cells according to the present disclosure further comprises polymerizing the polymerizable precursor of the polymeric material into the precursor structures of the mold. The polymerization may be performed, for example, according to any technique known in the art. Suitable polymerization conditions, such a reaction temperatures, suitable atmospheres and kinetics, may be appropriately chosen based on the starting reactive monomer mixture and the characteristics of the polymerizable precursor of the polymeric material. The polymerization may be typically performed in an inert atmosphere.

According to the claimed invention, polymerizing the polymerizable precursor of a polymeric material is performed by thermal polymerization.

According to a typical aspect, thermally polymerizing the polymerizable precursor of a polymeric material is performed at a temperature below the softening temperature of the polymeric material.

According to a preferred aspect, polymerizing the polymerizable precursor of a polymeric material is performed by at least one of ring-opening polymerization or polycondensation. In an advantageous execution, the polymerization is performed by ring-opening polymerization. Ring-opening polymerization is particularly suitable for the polymerization of a reactive monomer mixture comprising cyclic monomers (e.g., lactams and lactones), in particular lactams.

The ring-opening polymerization may be beneficially performed by any of ionic polymerization, radical polymerization or metathesis polymerization. In a preferred execution, the step of polymerizing the polymerizable precursor of a polymeric material is performed by ionic, in particular anionic ring-opening polymerization. The anionic ring-opening polymerization is particularly advantageous for the polymerization of a reactive monomer mixture comprising lactams (e.g., at least one of caprolactams or laurolactams).

Depending on the starting monomers of the reactive monomer mixture and the characteristics of the polymerizable precursor of the polymeric material, the polymerizable precursor may, for example, advantageously comprise at least one of polymerization activators or polymerization catalysts. The amount and nature of the polymerization activators and polymerization catalysts for use herein may be tailored depending upon the desired properties of the resulting polymeric material.

According to a preferred aspect of the process according to the disclosure, polymerizing the polymerizable precursor of the polymeric material is substantially completed within a period of no greater than 30 seconds, no greater than 25 seconds, no greater than 20 seconds, no greater than 15 seconds, no greater than 10 seconds, or even no greater than 5 seconds.

The process of manufacturing a multicellular structure comprising interconnected cells according to the present disclosure further comprises demolding the multicellular structure formed by polymerizing the polymerizable precursor of the polymeric material, and present into the precursor structures of the mold.

Demolding may be performed, for example, according to any technique known in the art. Suitable demolding conditions, such a demolding temperatures and suitable tools, may be appropriately chosen based on the starting reactive monomer mixture and the characteristics of the polymeric material formed into the precursor structures of the mold. In some particular aspects, it may be beneficial to use a release coating at the bottom part of the mold so as to facilitate the demolding of the multicellular structure present into the precursor structures of the mold.

According to an advantageous aspect of the process of the disclosure, demolding the multicellular structure may be performed in a range from 20 to 35°C, in particular at 23°C. According to typical aspect of the process, demolding the multicellular structure may be performed at a temperature below the softening temperature of the polymeric material.

According to another aspect, the present disclosure relates to a multicellular structure obtainable by the process as described above.

All the particular and preferred aspects described above with respect to the multicellular structure in the context of the process of manufacturing a multicellular structure, are herewith fully applicable to the multicellular structure obtainable by such process. These aspects relate in particular to the suitable polymeric material, the aspect-ratio (cell wall height to cell wall thickness), the cell wall height, the cell wall thickness, and the particular constructions of the multicellular structure.

According to an advantageous execution, the multicellular structure obtainable by the process as described above is a honeycomb structure. Preferably, the honeycomb structure comprises interconnected cells having a shape selected from the group of hexagons, squares, triangles, and any combinations thereof. More preferably, the honeycomb structure comprises interconnected cells having a hexagonal shape.

According to still another aspect, the present disclosure relates to a multicellular structure comprising a plurality of interconnected cells having at least one polygonal shape, each cell having cell walls, wherein none of the cell walls comprise a combination of layers, wherein each cell wall has a thickness, wherein the wall thicknesses are no greater than 0.5 mm, wherein each cell wall has a height, and wherein for each cell wall, the cell height to the cell wall thickness aspect-ratio is greater than 15:1.

In an advantageous aspect of the multicellular structure of the present disclosure, the wall thicknesses are no greater than 0.2 mm, no greater than 0.1 mm, no greater than 0.05 mm, or even no greater than 0.02 mm.

In another advantageous aspect of the multicellular structure of the present disclosure, the cell height to the cell wall thickness aspect-ratio is greater than 20:1, greater than 25: 1, or even greater than 30: 1.

All the particular and preferred aspects described above with respect to the multicellular structure in the context of the process of manufacturing a multicellular structure, are herewith fully applicable to the multicellular structure as described. These aspects relate in particular to the suitable polymeric material, the aspect-ratio (cell wall height to cell wall thickness), the cell wall height, the cell wall thickness, and the particular constructions of the multicellular structure.

According to an advantageous execution, the multicellular structure as described above is a honeycomb structure. Preferably, the honeycomb structure comprises interconnected cells having a shape selected from the group of hexagons, squares, triangles, and any combinations thereof. More preferably, the honeycomb structure comprises interconnected cells having a hexagonal shape.

According to still another aspect, the present disclosure relates to a sandwich composite comprising the multicellular structure as described above. The multicellular structure of the present disclosure may be indeed suitably associated with other appropriate constituting elements and form a sandwich composite. Any commonly known constituting elements of sandwich composites may be used with the multicellular structures of the present disclosure. Exemplary constituting elements include foams, films, adhesives layers, sheets, resin-infused fabrics, fiber-reinforced sheets, and combinations thereof.

In an advantageous aspect, the sandwich composite takes the form of a composite sandwich panel.

The multicellular structure of the present disclosure may be used in a variety of articles and applications, such as for packaging, holding, protecting, supporting, containing, engineering, and dampening purposes. These multicellular structures may be used in many industries, including transportation and construction industries, as well as in the packaging industries. As such, the multicellular structures of the present disclosure are particularly suitable for those applications requiring lightweight characteristics.

Accordingly, the present disclosure is further directed to the use of a multicellular structure or a sandwich composite as described above for industrial applications, in particular for construction and transportation applications.

In one advantageous aspect, the multicellular structure or the sandwich composite of the present disclosure are used for acoustical absorption, in particular in automotive applications.

In another advantageous aspect, the multicellular structure or the sandwich composite of the present disclosure are used for home improvement applications, in particular for decoration and surface protection; and for personal safety applications.

In still another advantageous aspect, the multicellular structure or the sandwich composite of the present disclosure are used for vibration damping and cushioning, in particular in home and office applications; and for fall protection applications.

### EXAMPLES

The present disclosure is further illustrated by the following examples. These examples are merely for illustrative purposes only and are not meant to be limiting on the scope of the appended claims.

### Test Methods applied:

### Viscosity Test Method:

The viscosity of the reactive monomer mixture is determined according to Test Method DIN EN ISO 3219:1993. The measurements are performed at the suitable temperature with a viscosimeter. The choice of a specific spindle type and suitable rotational speed for the viscosity measurements will depend on the particulars of the reactive monomer mixture and is well within the capabilities of those skilled in the art.

### Raw materials and equipment used:

In the examples, the following raw materials are used:
Epsilon-caprolactam is obtained from Brüggemann Chemical KG, Germany, under the trade designation "AP-NYLON^{®}".
Epsilon-Caprolactam polymerization catalyst obtained from Brüggemann Chemical KG, Germany, under the trade designation "BRUGGOLEN^{®} C10".
Epsilon-Caprolactam polymerization activator obtained from Brüggemann Chemical KG, Germany, under the trade designation "BRUGGOLEN^{®} C20P".
Polyol is obtained from King Industries, Norwalk, CT, USA, under the trade designation "K-FLEX 188".
Polyisocyanate obtained from Covestro, Leverkusen, Germany, under the trade designation "DESMODUR N3300".
Polyurethane polymerization catalyst obtained from Evonik Industries, Essen, Germany, under the trade designation "DABCO T12".

**Hand mold:** For performing the process of the present disclosure, it was made use of a lab scale aluminum hand mold having the following dimensions (127 mm x 77 mm x 9 mm) length-width-thickness) and provided with precursor structures of honeycomb structure comprising hexagonal cells, wherein the largest distance between two opposed walls is of about 10 mm, and wherein the precursor structures have the following dimensions: cell wall height of 7.6 mm and a cell wall thickness of 0.6 mm at the bottom surface of the mold and 1.3 mm at the top surface of the mold (i.e., opposed to the bottom surface of the mold).

### Examples:

### Example 1: Polyamide 6 multicellular structure

### Preparation of the reactive monomer mixture:

The reactive monomer mixture used in the process of the present and having the composition as shown in Table 1, were prepared as detailed below.

**Table 1**

| **Composition** | **Amount** |
|---|---|
| Epsilon-Caprolactam | 93 wt% |
| Epsilon-Caprolactam polymerization catalyst | 5 wt% |
| Epsilon-Caprolactam polymerization activator | 2 wt% |

Two glass 250 ml vessels (obtained from Schott AG, Germany) A and B were filled with 69.75 grams of epsilon-caprolactam, representing half of the total amount of epsilon-caprolactam. The epsilon-caprolactam polymerization activator was added to vessel A and the epsilon-caprolactam polymerization catalyst was added to vessel B. Both vessels were placed in an oil bath at 150°C to melt the ingredients and heat-up the monomer mixture before polymerization. In parallel, the hand mold is placed in an oven at 190°C to heat-up the mold for the subsequent polymerization step.

### Preparation of the multicellular structure:

After complete melting of the ingredients placed in vessels A and B, the hand mold was taken out of the oven and placed on a heating plate at 190°C to maintain the hand mold temperature. The content of vessel A was then added into vessel B in a nitrogen atmosphere and the mixture was stirred manually. The heated reactive monomer mixture was poured manually onto the hand mold with no additional pressure applied and still under nitrogen atmosphere, to allow the reactive monomer mixture to be incorporated into the precursor structures of the multicellular structure thereby substantially filling up the precursor structures of the hand mold. Excellent wetting and penetration into the precursor structures of the hand mold was observed within less than 5 seconds.

The polymerization of the reactive monomer mixture took place immediately when the content of vessel A is added into vessel B and was continued into the precursor structures of the multicellular structure in the hand mold. The polymerization of the reactive monomer mixture into polyamide 6 is substantially completed after about 20 seconds after the heated reactive monomer mixture has been poured onto the hand mold.

After a period of 5 minutes after the heated reactive monomer mixture had been poured onto the hand mold, the hand mold is cooled to room temperature using water. The multicellular structure was then demolded manually from the mold.

The resulting honeycomb multicellular structure had a cell wall height of about 7.6 mm and a cell wall thickness of about 0.6 mm at the surface corresponding to the bottom surface of the mold and about 1.3 mm at the surface corresponding to the top surface of the mold.

### Example 2: Polyurethane multicellular structure

### Preparation of the reactive monomer mixture:

11.4 grams of the polyol was weighed into a 50-ml disposable beaker (available from Sigma-Aldrich). 9.5 grams of the polyisocyanate was added into the beaker followed by 2 drops of the polyurethane polymerization catalyst.

### Preparation of the multicellular structure:

The ingredients were mixed by stirring with a tongue depressor for about 30 seconds at ambient room temperature (23°C +/- 2°C, 50% relative humidity +/-5%°C), then poured onto the honeycomb hand mold. The mixture flowed into the tool and a glass fabric was laid over the mixture which was then left to cure for 30 minutes. After this time, the polyurethane was sufficiently strong to pull out cleanly and manually from the honeycomb tooling roll.

The resulting honeycomb multicellular structure had a cell wall thickness of about 0.6 mm at the surface corresponding to the bottom surface of the mold and about 1.3 mm at the surface corresponding to the top surface of the mold.

## Claims

1. A process of manufacturing a multicellular structure comprising interconnected cells, wherein the process comprises:
a) providing a polymerizable precursor of a polymeric material, wherein the polymerizable precursor comprises a reactive monomer mixture, and wherein the monomers of the reactive monomer mixture are selected from the group consisting of lactams, lactones, isocyanates, polyols, polyamines and any combinations or mixtures thereof;
b) providing a mold comprising precursor structures of the multicellular structure, wherein the multicellular structure has a cell wall height of greater than 5 mm;
c) optionally, heating at least one of the reactive monomer mixture or the mold;
d) incorporating the reactive monomer mixture into the precursor structures of the multicellular structure thereby substantially filling up the precursor structures of the mold, wherein the reactive monomer mixture has a viscosity of no greater than 10,000 mPa-s when incorporated into the precursor structures of the multicellular structure and when measured according to the viscosity test method DIN EN ISO 3219:1993;
e) polymerizing the polymerizable precursor of the polymeric material into the precursor structures of the mold by thermal polymerization; and
f) demolding the multicellular structure formed by polymerizing the polymerizable precursor of the polymeric material.

2. A process according to claim 1, wherein the reactive monomer mixture for use herein has a viscosity of no greater than 9,000 mPa-s, no greater than 8,000 mPa-s, no greater than 7,000 mPa-s, no greater than 6,000 mPa-s, no greater than 6,500 mPa-s, no greater than 6,000 mPa-s, no greater than 5,500 mPa-s, no greater than 5,000 mPa-s, no greater than 4,000 mPa-s, no greater than 3,500 mPa-s, no greater than 3,000 mPa-s, no greater than 2,500 mPa-s, no greater than 2,000 mPa-s, or even no greater than 1,500 mPa-s, when measured according to the viscosity test method DIN EN ISO 3219:1993.

3. A process according to any of claims 1 or 2, wherein the monomers of the reactive monomer mixture are selected from the group consisting of lactams, isocyanates, polyols, and any combinations or mixtures thereof.

4. A process according to any of the preceding claims, wherein the polymeric material is selected from the group consisting of polyamides, polyurethanes, any combinations or mixtures thereof.

5. A process according to any of the preceding claims, wherein the multicellular structure has a cell wall height of greater than 8 mm, greater than 10 mm, greater than 15 mm, greater than 20 mm, greater than 25 mm, or even greater than 30 mm.

6. A process according to any of the preceding claims, wherein the multicellular structure has a cell wall thickness of no greater than 2.5 mm, no greater than 2.0 mm, no greater than 1.5 mm, no greater than 1.0 mm, or even no greater than 0.5 mm.

7. A process according to any of the preceding claims, wherein the multicellular structure is a honeycomb structure.

8. A multicellular structure obtainable by the process according to any of claims 1 to 7, wherein the multicellular structure has a cell wall height of greater than 5 mm.

9. A multicellular structure according to claim 8, which has a cell wall height of greater than 8 mm, greater than 10 mm, greater than 15 mm, greater than 20 mm, greater than 25 mm, or even greater than 30 mm.

10. A multicellular structure according to any of claims 8 or 9, which has a cell wall thickness in a range from 0.005 to 2.5 mm, from 0.02 to 2.0 mm, from 0.05 to 1.5 mm, from 0.05 to 1.0 mm, or even from 0.1 to 0.5 mm.

11. A multicellular structure according to any of claims 8 to 10, which is a honeycomb structure.

12. A sandwich composite comprising the multicellular structure according to any of claims 8 to 11.

13. Use of a multicellular structure according to any of claims 8 to 11 or a sandwich composite according to claim 12 for industrial applications, in particular for construction and transportation applications.

## Patentansprüche

1. Ein Verfahren zum Herstellen einer multizellulären Struktur, aufweisend miteinander verbundene Zellen, wobei der Prozess aufweist:
a) Bereitstellen eines polymerisierbaren Vorläufers eines Polymermaterials, wobei der polymerisierbare Vorläufer eine reaktive Monomermischung aufweist, und wobei die Monomere der reaktiven Monomermischung ausgewählt sind aus der Gruppe bestehend aus Lactamen, Lactonen, Isocyanaten, Polyolen, Polyaminen und beliebigen Kombinationen oder Mischungen davon;
b) Bereitstellen einer Form, aufweisend Vorläuferstrukturen der multizellulären Struktur, wobei die multizelluläre Struktur eine Zellwandhöhe von mehr als 5 mm aufweist;
c) optional Erhitzen mindestens eines von der reaktiven Monomermischung oder der Form;
d) Inkorporieren der reaktiven Monomermischung in die Vorläuferstrukturen der multizellulären Struktur, wodurch die Vorläuferstrukturen der Form im Wesentlichen aufgefüllt werden, wobei die reaktive Monomermischung eine Viskosität von nicht mehr als 10.000 mPa-s aufweist, wenn sie in die Vorläuferstrukturen der multizellulären Struktur inkorporiert werden, und wenn gemessen gemäß dem Viskositätsprüfverfahren DIN EN ISO 3219:1993;
e) Polymerisieren des polymerisierbaren Vorläufers des Polymermaterials in die Vorläuferstrukturen der Form durch thermische Polymerisierung; und
f) Entformen der multizellulären Struktur, die durch Polymerisieren des polymerisierbaren Vorläufers des Polymermaterials ausgebildet wird.

2. Ein Verfahren nach Anspruch 1, wobei die reaktive Monomermischung zur Verwendung hierin eine Viskosität von nicht mehr als 9.000 mPa-s, nicht mehr als 8.000 mPa-s, nicht mehr als 7.000 mPa-s, nicht mehr als 6.000 mPa-s, nicht mehr als 6.500 mPa-s, nicht mehr als 6 000 mPa-s, nicht mehr als 5.500 mPa-s, nicht mehr als 5.000 mPa-s, nicht mehr als 4.000 mPa-s, nicht mehr als 3.500 mPa-s, nicht mehr als 3.000 mPa-s, nicht mehr als 2.500 mPa-s, nicht mehr als 2.000 mPa-s, nicht mehr als 1.500 mPa-s aufweist, wenn gemessen gemäß dem Viskositätsprüfverfahren DIN EN ISO 3219:1993.

3. Ein Verfahren nach Anspruch 1 oder 2, wobei die Monomere der reaktiven Monomermischung ausgewählt sind aus der Gruppe bestehend aus Lactamen, Isocyanaten, Polyolen, und beliebigen Kombinationen oder Mischungen davon.

4. Ein Verfahren nach einem der vorstehenden Ansprüche, wobei das Polymermaterial ausgewählt ist aus der Gruppe bestehend aus Polyamiden, Polyurethanen, beliebigen Kombinationen oder Mischungen davon.

5. Ein Verfahren nach einem der vorstehenden Ansprüche, wobei die multizelluläre Struktur eine Zellwandhöhe von mehr als 8 mm, mehr als 10 mm, mehr als 15 mm, mehr als 20 mm, mehr als 25 mm oder sogar mehr als 30 mm aufweist.

6. Ein Verfahren nach einem der vorstehenden Ansprüche, wobei die multizelluläre Struktur eine Zellwanddicke von nicht mehr als 2,5 mm, nicht mehr als 2,0 mm, nicht mehr als 1,5 mm, nicht mehr als 1,0 mm oder sogar nicht mehr als 0,5 mm aufweist.

7. Ein Verfahren nach einem der vorstehenden Ansprüche, wobei die multizelluläre Struktur eine Wabenstruktur ist.

8. Eine multizelluläre Struktur, die durch das Verfahren nach einem der Ansprüche 1 bis 7 erhältlich ist, wobei die multizelluläre Struktur eine Zellwandhöhe von mehr als 5 mm aufweist.

9. Eine multizelluläre Struktur nach Anspruch 8, die eine Zellwandhöhe von mehr als 8 mm, mehr als 10 mm, mehr als 15 mm, mehr als 20 mm, mehr als 25 mm oder sogar mehr als 30 mm aufweist.

10. Eine multizelluläre Struktur nach einem der Ansprüche 8 oder 9, die eine Zellwanddicke in einem Bereich von 0,005 bis 2,5 mm, von 0,02 bis 2,0 mm, von 0,05 bis 1,5 mm, von 0,05 bis 1,0 mm oder sogar von 0,1 bis 0,5 mm aufweist.

11. Eine multizelluläre Struktur nach einem der Ansprüche 8 bis 10, die eine Wabenstruktur ist.

12. Ein Sandwich-Verbundstoff, aufweisend die multizelluläre Struktur nach einem der Ansprüche 8 bis 11.

13. Verwendung einer multizellulären Struktur nach einem der Ansprüche 8 bis 11 oder einem Sandwich-Verbundstoff nach Anspruch 12 für industrielle Anwendungen, insbesondere für Bau- und Transportanwendungen.

## Revendications

1. Processus de fabrication d'une structure multicellulaire comprenant des cellules interconnectées, le processus comprenant :
a) la fourniture d'un précurseur polymérisable d'un matériau polymère, le précurseur polymérisable comprenant un mélange de monomères réactifs, et les monomères du mélange de monomères réactifs étant choisis dans le groupe constitué par lactames, lactones, isocyanates, polyols, polyamines et n'importe quelles combinaisons ou n'importe quels mélanges de ceux-ci ;
b) la fourniture d'un moule comprenant des structures de précurseur de la structure multicellulaire, la structure multicellulaire ayant une hauteur de paroi de cellule supérieure à 5 mm ;
c) facultativement, le chauffage d'au moins l'un parmi le mélange de monomères réactifs ou le moule ;
d) l'incorporation du mélange de monomères réactifs dans les structures de précurseur de la structure multicellulaire, ce qui remplit sensiblement les structures de précurseur du moule, le mélange de monomères réactifs ayant une viscosité n'excédant pas 10 000 m Pa s lorsqu'il est incorporé dans les structures de précurseur de la structure multicellulaire et lorsqu'on mesure selon le procédé de test de viscosité DIN EN ISO 3219:1993 ;
e) la polymérisation du précurseur polymérisable du matériau polymère dans les structures de précurseur du moule par polymérisation thermique ; et
f) le démoulage de la structure multicellulaire formée par polymérisation du précurseur polymérisable du matériau polymère.

2. Processus selon la revendication 1, dans lequel le mélange de monomères réactifs pour utilisation ici a une viscosité n'excédant pas 9000 mPa·s, n'excédant pas 8000 mPa·s, n'excédant pas 7000 mPa·s, n'excédant pas 6000 mPa·s, n'excédant pas 6500 mPa·s, n'excédant pas 6000 mPa·s, n'excédant pas 5500 mPa·s, n'excédant pas 5000 mPa·s, n'excédant pas 4000 mPa·s, n'excédant pas 3500 mPa·s, n'excédant pas 3000 mPa·s, n'excédant pas 2500 mPa·s, n'excédant pas 2000 mPa·s, ou même n'excédant pas 1500 mPa·s, lorsqu'on mesure selon le procédé de test de viscosité DIN EN ISO 3219:1993.

3. Processus selon l'une quelconque des revendications 1 ou 2, dans lequel les monomères du mélange de monomères réactifs sont choisis dans le groupe constitué par lactames, isocyanates, polyols, et n'importe quelles combinaisons ou n'importe quels mélanges de ceux-ci.

4. Processus selon l'une quelconque des revendications précédentes, dans lequel le matériau polymère est choisi dans le groupe constitué par polyamides, polyuréthanes, n'importe quelles combinaisons ou n'importe quels mélanges de ceux-ci.

5. Processus selon l'une quelconque des revendications précédentes, dans lequel la structure multicellulaire a une hauteur de paroi de cellule supérieure à 8 mm, supérieure à 10 mm, supérieure à 15 mm, supérieure à 20 mm, supérieure à 25 mm, ou même supérieure à 30 mm.

6. Processus selon l'une quelconque des revendications précédentes, dans lequel la structure multicellulaire a une épaisseur de paroi de cellule n'excédant pas 2,5 mm, n'excédant pas 2,0 mm, n'excédant pas 1,5 mm, n'excédant pas 1,0 mm, ou même n'excédant pas 0,5 mm.

7. Processus selon l'une quelconque des revendications précédentes, dans lequel la structure multicellulaire est une structure en nid d'abeilles.

8. Structure multicellulaire pouvant être obtenue par le processus selon l'une quelconque des revendications 1 à 7, la structure multicellulaire ayant une hauteur de paroi de cellule supérieure à 5 mm.

9. Structure multicellulaire selon la revendication 8, qui a une hauteur de paroi de cellule supérieure à 8 mm, supérieure à 10 mm, supérieure à 15 mm, supérieure à 20 mm, supérieure à 25 mm, ou même supérieure à 30 mm.

10. Structure multicellulaire selon l'une quelconque des revendications 8 ou 9, qui a une épaisseur de paroi de cellule dans une plage allant de 0,005 à 2,5 mm, de 0,02 à 2,0 mm, de 0,05 à 1,5 mm, de 0,05 à 1,0 mm, ou même de 0,1 à 0,5 mm.

11. Structure multicellulaire selon l'une quelconque des revendications 8 à 10, qui est une structure en nid d'abeilles.

12. Composite sandwich comprenant la structure multicellulaire selon l'une quelconque des revendications 8 à 11.

13. Utilisation d'une structure multicellulaire selon l'une quelconque des revendications 8 à 11 ou d'un composite sandwich selon la revendication 12 pour des applications industrielles, en particulier pour des applications de construction et de transport.
